# EUROPÄISCHE PATENTSCHRIFT

(11) **EP 1 602 197 B1**
(45) Veröffentlichungstag und Bekanntmachung des Hinweises auf die Patenterteilung: **17.01.2007**
(21) Anmeldenummer: 03776841.3
(22) Anmeldetag: 08.11.2003
(51) Int. Cl.: H04L 12/28

(54) **VERFAHREN UND VORRICHTUNG ZUR STEUERUNG VON AUF DEM HAVI-STANDARD BASIERENDEN GERÄTEN DURCH DEVICE CONTROL MODULE EINER OSGI-PLATTFORM**
METHOD AND DEVICE FOR CONTROLLING HAVI STANDARD DEVICES BY DEVICE CONTROL MODULES OF AN OSGI PLATFORM
PROCEDE ET DISPOSITIF POUR COMMANDER DES APPAREILS FONCTIONNANT SELON LA NORME HAVI PAR UN MODULE DE COMMANDE DE DISPOSITIF D'UNE PLATE-FORME OSGI

(30) Priorität: 24.01.2003 DE 10302678
(43) Veröffentlichungstag der Anmeldung: 07.12.2005
(73) Patentinhaber: ROBERT BOSCH GMBH, 70442 Stuttgart (DE)
(72) Erfinder: PRAEFCKE, Werner, 31141 Hildesheim (DE); EYMANN, Thomas, 31135 Hildesheim (DE)
(86) Internationale Anmeldenummer: PCT/DE2003/003712
(87) Internationale Veröffentlichungsnummer: WO 2004/068792

(56) Entgegenhaltungen:
- WO-A-01/19032
- BAIER R ET AL: "MULTIMEDIA MIDDLEWARE FOR THE FUTURE HOME" ACM MULTIMEDIA 2001 WORKSHOPS. INTERNATIONAL WORKSHOP ON MULTIMEDIA MIDDLEWARE (M3W). OTTAWA, CANADA, OCT. 5, 2001, ACM MULTIMEDIA CONFERENCE, NEW YORK, NY: ACM, US, 5. Oktober 2001 (2001-10-05), Seiten 48-51, XP001114065 ISBN: 1-58113-396-0
- ZAHARIADIS T ET AL: "Multimedia home networks: standards and interfaces" COMPUTER STANDARDS AND INTERFACES, ELSEVIER SEQUOIA. LAUSANNE, CH, Bd. 24, Nr. 5, November 2002 (2002-11), Seiten 425-435, XP004387760 ISSN: 0920-5489
- CONDRY M ET AL: "Open Service Gateway architecture overview" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29. November 1999 (1999-11-29), Seiten 735-742, XP010366642 ISBN: 0-7803-5735-3

## Beschreibung

### Technisches Gebiet

Die Erfindung betrifft ein Verfahren und eine Vorrichtung zur Steuerung von auf dem HAVi-Standard basierenden Geräten (HAVi-Geräte) durch Device Control Module einer OSGi-Plattform.

### Stand der Technik

Die IEEE (Institute of Electrical and Electronics Engineers, Inc.) ist eine internationale Organisation, die unter anderem Standards für elektronische Netzwerke erarbeitet. IEEE1394 ist ein serielles Bussystem der IEEE, bei dem verschiedene Endgeräte (so genannte Knoten) entweder über ein elektrisches Kabel oder einen Lichtwellenleiter angeschlossen werden. Dabei kann ein Knoten wahlweise als Endstück (so genanntes Blatt) oder als Relaisknoten (so genannter Zweig) ausgeführt sein. Der oberste Knoten wird als Wurzel bezeichnet. Durch den Einsatz der verschiedenen Knotentypen kann eine geeignete Topologie für ein Netzwerk aufgebaut werden. Ein Blatt empfängt dabei Informationspakete und verarbeitet sie, falls die Ziel-Adresse des Paketes mit der eigenen übereinstimmt. Ein Zweig muss zusätzlich alle Pakete, die er auf einem Port empfängt, auf allen anderen Ports aussenden.

IEEE1394 sieht vor, dass das Netzwerk selbstkonfigurierend ist, das heißt, nach dem Einschalten oder nach einem Reset senden alle Knoten ausgewählte Informationen über sich selbst ins Netz. Diese Informationen werden dabei von allen Knoten empfangen. Ein Knoten kann dabei in der Art ausgeführt sein, dass er zusätzliche Verwaltungsfunktionen für das Netzwerk übernehmen kann (Busmanagement). Dazu sammelt er alle Informationen der anderen Knoten, verarbeitet sie und speichert sie intern geeignet ab. Sollten mehrere Knoten Busmanagementfähigkeiten besitzen, gibt es ein Konkurrenzverfahren, aus dem ein Knoten als Sieger hervorgeht, welcher dann das Busmanagement übernimmt.

Neben den Verfahren, wie sie in den Spezifikationen zu IEEE1394 beschrieben sind, gibt es eine busunabhängige Erweiterung, die unter dem Namen "Home Audio Video interoperability" (HAVi) von einem Firmenkonsortium spezifiziert worden ist. HAVi ist in erster Linie für den Einsatz in einem IEEE1394-Netzwerk konzipiert und bezeichnet die Summe aller Geräte, die innerhalb eines geschlossenen Netzwerk-Kontextes von einem oder mehreren HAVi-basierten Knoten mit den im HAVi-Standard beschriebenen Methoden aus gesteuert werden, sowie die dazu notwendige Netzwerk-Infrastruktur. Dabei können Teile des HAVi-Netzes auch als Geräte ohne eigene HAVi-Funktionalität ausgeführt werden (so genannte Legacy Devices). Typisch für HAVi-Netzwerke ist die Verwendung hochratiger Netzwerktechnologien (zum Beispiel IEEE1394, MOST, Ethernet; WLAN).

Insbesondere die Fern-Kontrolle von Geräten und/oder Funktionen auf Geräten von jedem anderen Punkt im Netzwerk wird in der HAVi-Spezifikation beschrieben.

Dazu ist ein verteiltes Modell beschrieben, bei dem die Steuerung der Geräte über Kontrollmodule, so genannte "Device Control Modules" (DCMs oder DCM), vorgenommen wird. Ein solches DCM läuft als Softwareelement (SE) auf dem Gerät, das Kontrollfunktionen auf einem anderen Gerät ausführen will. Dabei ist ein DCM jeweils spezifisch für ein bestimmtes Gerät oder eine Geräteklasse.

HAVi basiert auf einem modularen Konzept für ein verteiltes System. Die einzelnen Module stellen dabei die Softwareelemente (SE) dar. Alle SE im System werden einheitlich adressiert. SE können in den meisten Fällen sowohl zentral als auch verteilt angeordnet sein. Das heißt, dass eine Implementierung mit nur einer Instanz eines bestimmten Softwareelementes (zum Beispiel einem Stream Manager) bis hin zu einer Implementierung, die in jedem Gerät eine solche Instanz vorsieht, möglich ist.

Über das so genannte Messaging System (MS) sind sämtliche SE eines Netzwerkes miteinander verbunden. Ein Netzwerk nach dem HAVi-Standard (HAVi-Netzwerk) weist in der Regel folgende SE auf:
Die Registry beinhaltet Informationen über jedes im Netzwerk verfügbare SE und jedes verfügbare Gerät beziehungsweise jede verfügbare Funktion. Informationen über die einzelnen SE werden dabei in Attributen abgelegt. Zusätzlich zu den vordefinierten Attributen ist es möglich, weitere hinzuzufügen. Die Architektur der Registry stellt ein verteiltes System dar, das heißt, jedes Gerät kann einen Teil der gesamten Registry beinhalten, sie kann aber auch zentral gehalten werden. Für den Zugriff auf die Registry ist dies unsichtbar, da die verschiedenen Instanzen der Registry innerhalb des Netzwerkes gegebenenfalls die angeforderten Information selbsttätig austauschen.

Der Stream Manager (SM) dient dem Auf- und Abbau und der Verwaltung von isochronen Multimediaverbindungen (Audio-, Videodaten) zwischen SE und/oder Geräten. Der SM kann wie die Registry als verteiltes System aufgebaut sein. Dabei dienen spezielle Befehle dazu, den Zustand aller SM oder eines bestimmten SM zu erhalten.

Der Event Manager transportiert Mitteilungen über Zustandsänderungen im System zu den Kommunikationsteilnehmern

Der Resource Manager führt die Belegung und Freigabe von Ressourcen (Geräten, SE) durch und speichert geplante Vorgänge (zum Beispiel Videorekorderaufnahmen).

Der DCM Manager (DM) ist verantwortlich für das Installieren und Deinstallieren von DCMs bei entsprechend geeigneten Geräten. Dabei wird ein standardisiertes Verfahren zur Installation von DCMs im Java-Bytecode-Format angeboten. Eine Installation von nativem Code (Binary) ist nicht im Standard beschrieben, kann jedoch als proprietäre Lösung hinzugefügt werden. Befinden sich mehrere HAVi-Geräte mit DMs in einem HAVi-Netzwerk, gibt es einen DM Leader. Für den Fall, dass für ein neu hinzugekommenes Gerät mehrere geeignete DCMs gefunden werden, trifft dieser die Entscheidung, welches DCM installiert wird. Die übrigen DMs werden als DM Follower bezeichnet.

Ein Functional Control Modul (FCM) ist ein SE, mit dem eine funktionale Einheit eines Gerätes (zum Beispiel ein CD-Laufwerk oder ein UKW-Tuner) angesteuert wird. Ein DCM (Device Control Modul) wird dabei aus den allen DCMs gemeinsamen Grundfunktionen und gerätespezifischen FCMs gebildet. Diese oder die jeweils in einem Gerät benötigten Module bilden eine einheitliche Applikationsschnittstelle. Durch diese einheitliche Schnittstelle wird eine Interoperabilität zwischen Applikationen und Geräten verschiedener Hersteller erreicht (Interoperability API).

Die in einem HAVi Netzwerk verbundenen Geräte fallen in eine von vier möglichen Kategorien. Diese unterscheiden sich unter anderem in der Verfügbarkeit der oben beschriebenen Softwareelemente. FAV (Full Audio Video) Devices und IAV (Intermediate Audio Video) Devices sind Geräteklassen, die über Steuerungsmöglichkeiten verfügen. Über diese können Funktionalitäten in anderen FAV und IAV Devices sowie in BAV (Base Audio Video) und LAV (Legacy Audio Video) Devices, welche nur als gesteuerte Geräte agieren, angesprochen werden.

Ein FAV Device verfügt über alle oben genannten SEs. Insbesondere ist eine Java Laufzeitumgebung vorhanden, mit Hilfe derer DCMs für neu ins Netzwerk hinzutretende Geräte dynamisch installiert werden können.

Ein IAV Device verfügt über eine eingeschränkte Funktionalität. SM, DM, RM sind nicht obligatorisch. Durch die ebenfalls fehlende Java Laufzeitumgebung sind nur Geräte steuerbar, deren DCM bereits vorliegt.

Ein BAV Device kann keine anderen Geräte steuern, stellt aber ein Java DCM bereit, das, auf einem FAV installiert, zur Steuerung der eigenen Funktionalität dient. Neben diesem Java DCM besitzt ein BAV keine weiteren HAVi SEs. Das BAV Device kann ein Java DCM auf ein FAV Device übertragen, welches dort über ein nicht festgelegtes Protokoll zur Steuerung der eigenen Funktionalität dient.

Ein LAV Device ist ebenfalls ein steuerbares Gerät, ohne jedoch ein Java DCM zur Verfügung stellen zu können. Dem steuernden Gerät (FAV oder IAV Device) muss das LAV Gerät im Vorfeld genau bekannt sein, um die HAVi Befehle in solche Kommandos zu übertragen, die es akzeptiert.

Die Open Service Gateway Initiative (OSGi) ist eine nicht-kommerzielle Organisation, in der über 80 Firmen weltweit beteiligt sind. Die Organisation beschäftigt sich mit der Erstellung einer Spezifikation für eine Diensteplattform, auf die zur Laufzeit Dienste dynamisch geladen, aktiviert und wieder entfernt werden können. Die Dienste werden in Paketen gegliedert verarbeitet, die als Bundles (Bündel) bezeichnet werden. Die Plattform zeichnet sich dadurch aus, dass sie es den Modulen einzelner Dienste aus verschiedenen Paketen erlaubt, zu interagieren. Die Interoperabilität wird durch die Standardisierung von Schnittstellen durch die OSGi Organisation erreicht. Außerdem soll die Plattform sowohl den Zugang zu im lokalen Netzwerk angeschlossenen Geräten ermöglichen, als auch eine Verbindung zum globalen Netzwerk (WAN) unterstützen. Die Realisierung der Geräteverbindungen beziehungsweise der Netzwerke wird dabei nicht definiert, sondern auf bestehende Standards zurückgegriffen und diese auf funktionaler Basis durch eine Schnittstellenspezifikation zur Applikationsebene abstrahiert. Außerdem ist vorgesehen, dass alle Verwaltungsoperationen auch aus der Ferne über eine Netzwerkverbindung vorgenommen werden können. Die Realisierung und Spezifikation der

Diensteplattform verwendet die Dienste unterstützende Softwaretechnologie Java.

Der OSGi-Standard sieht keinen Mechanismus vor, Geräte eines HAVi-Netzwerkes (HAVi-Geräte) über DCMs des OSGi-Frameworks zu steuern. Dies ist jedoch deshalb wünschenswert, da über eine OSGi-Plattform eine umfangreichere und flexiblere Auswahl an möglichen Device Control Modulen (DCMs) angeboten werden kann.

Weiterhin offenbart Dokument WO 01/19032 ein System, in welchem ein Device Control Modul eines HAVi-Standards ein Kontrollsystem eines physikalischen Gerätes repräsentiert (Seite 9, Zeile 29-31). Mehrere HAVi-Geräte werden nicht nur, wie im HAVi-Standard vorgesehen, an einen einzelnen Bus miteinander angeschlossen, sondern zusätzlich auch über ein Bridge verbunden. Dadurch können Geräte auf der einen Seite der Bridge die anderen Geräte auf der anderen Seite der Bridge repräsentieren.

### Darstellung der Erfindung, Aufgabe, Lösung, Vorteile

Es ist daher Aufgabe der vorliegenden Erfindung, ein Verfahren anzugeben, welches die automatische Anforderung und Bereitstellung von DCMs nach dem HAVi-Standard über eine OSGi-Plattform ermöglicht. Dadurch sollen insbesondere OSGi DCMs eingerichtet und dem gesamten Netzwerk zur Verfügung gestellt und hierdurch HAVi-Geräte gesteuert werden können. Diese OSGi DCMs können sowohl in Java Bytecode als auch in native Code ausgeführt sein. Weiterhin soll eine Vorrichtung zur Realisierung des erfindungsgemäßen Verfahrens angegeben werden.

Diese Aufgabe wird erfindungsgemäß gelöst durch die Merkmale im kennzeichnenden Teil des Anspruchs 1 (Verfahrensanspruch) und die Merkmale im kennzeichnenden Teil des Anspruchs 13 (Vorrichtungsanspruch) im Zusammenwirken mit den Merkmalen im Oberbegriff. Zweckmäßige Ausgestaltungen der Erfindung sind in den Unteransprüchen enthalten.

Der Erfindung liegt die Idee zugrunde, den DM in die OSGi-Ebene zu erweitern, damit dieser erweiterte DM sämtliche Funktionen, wie Suche, Auswahl, Installation und Verwaltung von DCMs (Device Control Module), sowohl innerhalb des HAVi-Netzes als auch der OSGi-Plattform wahrnehmen kann.

Dazu wird mindestens ein Device Control Modul des HAVi-Netzwerkes durch ein Device Control Modul einer OSGi-Plattform repräsentiert. Durch den Einsatz der DCMs der OSGi-Plattform als DCMs des HAVi-Netzwerkes können diese DCMs dem HAVi-Netzwerk zusätzlich zur Verfügung gestellt werden. Die Steuerung mindestens eines HAVi-Gerätes erfolgt erfindungsgemäß durch ein im HAVi-Netzwerk repräsentiertes Device Control Modul einer OSGi-Plattform beziehungsweise durch ein ursprüngliches DCM des HAVi-Netzwerkes. Der Einsatz der verfügbaren Device Control Module der OSGi-Plattform als Device Control Module des HAVi-Netzwerkes kann durch Abbildung der verfügbaren Device Control Module der OSGi-Plattform in einen dafür vorgesehenen OSGi DM Client innerhalb der OSGi-Plattform und Verbinden des OSGi DM Client mit dem HAVi DM und Unterstützung der DCM-Suche durch den OSGi DM Client erfolgen. Dabei ist es vorgesehen, dass beim Hinzutreten eines HAVi-Gerätes die Suche des HAVi DM nach geeigneten DCMs auf den OSGi DM Client erweitert wird. Dadurch, dass dem HAVi DM (DCM Manager des HAVi-Netzwerkes) ein synchron laufender OSGi DM Client zur Seite gestellt wird, können DCMs wahlweise mit Hilfe der herkömmlichen HAVi-Mechanismen, zum Beispiel als Java DCM, oder über OSGi-Mechanismen bezogen werden. Dadurch kann eine umfangreichere und flexiblere Auswahl an DCMs angeboten werden. Insbesondere wird eine nachträgliche und von außen gesteuerte Aktualisierung bereits in Betrieb befindlicher DCMs für das gesamte HAVi-Netzwerk möglich.

Das Bekanntmachen der im OSGi DM Client abgebildeten Device Control Module der OSGi-Plattform im HAVi-Netzwerk erfolgt vorzugsweise durch Verbinden von DM des HAVi-Netzwerkes und OSGi DM Client der OSGi-Plattform. Dabei ist es vorgesehen, dass der OSGi DM Client der OSGi-Plattform mit dem DM Leader des HAVi-Netzwerkes verbunden wird, sofern das HAVi-Netzwerk mehrere DMs aufweist. Weiterhin stellt der OSGi DM Client seine Device Control Module dem DM des HAVi-Netzwerks zur Verfügung.

Erfindungsgemäß ist es vorgesehen, dass Änderungen über verfügbare Device Control Module des OSGi DM Clients dem HAVi DM Leader mitgeteilt werden. Vorteilhafterweise wird ein Device Control Modul der OS-Gi-Plattform als Bundle innerhalb der OSGi-Plattform verarbeitet.

Die Kommunikation des HAVi-Netzwerkes mit einem Device Control Modul der OSGi-Plattform erfolgt vorzugsweise über ein MS Adaption Layer.

Ferner ist es vorgesehen, dass der OSGi DM Client das Hinzukommen neuer Geräte dem OSGi Device Access Service mitteilt und sich ein Device Control Modul der OSGi-Plattform bei der Registry des HAVi-Netzwerkes anmeldet.

Eine erfindungsgemäße Vorrichtung zur Steuerung von HAVi-Geräten über Device Control Module einer OSGi-Plattform ist durch Mittel zur Repräsentation mindestens eines Device Control Moduls eines HAVi Netzwerkes durch ein Device Control Modul einer OSGi Plattform gekennzeichnet.

### Kurze Beschreibung der Zeichnungen

Nachstehend wird die Erfindung in Ausführungsbeispielen anhand der beigefügten Zeichnungen näher erläutert. Es zeigen:
- Figur 1: eine schematische Darstellung eines HAVi-Netzwerkes und einer OSGi-Plattform;
- Figur 2: eine schematische Darstellung einer Ansteuerung eines HA-Vi-Gerätes über ein DCM einer OSGi-Plattform und
- Figur 3: eine schematische Darstellung von zwei HAVi-Netzwerken.

### Bester Weg zur Ausführung der Erfindung

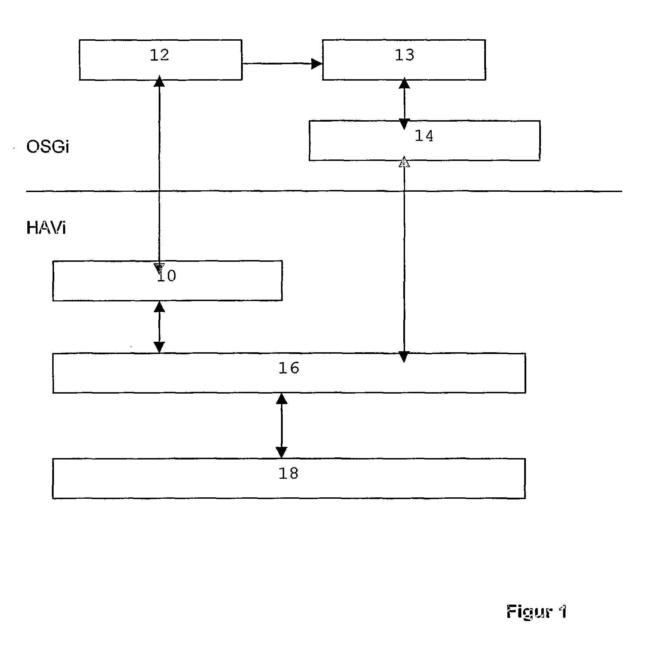

Figur 1 zeigt eine schematische Darstellung eines HAVi-Netzwerkes und einer OSGi-Plattform. Das HAVi-Netzwerk verfügt über einen DCM Manager 10 (DM), ein Messaging System 16 (MS) und einen Bus 18. Weiterhin verfügt das HAVi-Netzwerk über in Figur 1 aus Gründen der Übersichtlichkeit nicht dargestellte Stream Manager, Event Manager, Registry und Resource Manager. Das OSGi-Framework weist erfindungsgemäß einen zum DM 10 synchron laufenden DM Client 12 sowie ein MS Adaption Layer 14 auf.

Erfindungsgemäß kommunizieren steuerfähige HAVi-Geräte, also FAV Devices oder IAV Devices, mit der OSGi-Plattform abgesehen von der direkten Verknüpfung zwischen DM 10 und OSGi DM Client 12 über ein MS Adaption Layer 14, welches den alleinigen Zugang zum HAVi-System für Komponenten unter OSGi darstellt. Sofern dem HAVi-Netzwerk ein HAVi FAV Device beitritt und mindestens ein DCM Manager im Netzwerk vorhanden ist, wird ein neuer DM Leader ermittelt.

Der DM 10 bekommt auf der OSGi-Ebene einen OSGi DM Client 12 zur Seite gestellt. Dieser DM Client 12 wird als Bundle unter OSGi gestartet. DM Client 12 und DM 10 laufen parallel und synchron. Wird ein Gerät an das Netzwerk angeschlossen, wird es vom DM Leader identifiziert. Der DM Leader fragt auch bei allen DM Followern im Netzwerk an, ob geeignete DCMs (Device Control Module) existieren. Da der DM 10 über einen OSGi DM Client 12 verfügt, wird auch im OSGi Framework nach möglichen DCMs (in Java) gesucht. Dadurch können für die FAV Devices und IAV Devices des HAVi-Netzwerkes zusätzliche DCMs angeboten werden.

Wählt der DM Leader 10 ein OSGi DCM 13, startet sich dieses als OSGi Bundle. Das OSGi DCM 13 meldet sich beim HAVi Messaging System 16 an und bekommt eine Software Element Identification (SEID) zugewiesen und meldet sich bei der Registry des Havi-Netzwerkes (nicht dargestellt) an. In jedem Fall meldet der DM Client 12 das neue Gerät dem OSGi Device Access Service (nicht dargestellt), um es über einen entsprechenden Base Driver (nicht dargestellt) dem OSGi-System zugänglich zu machen.

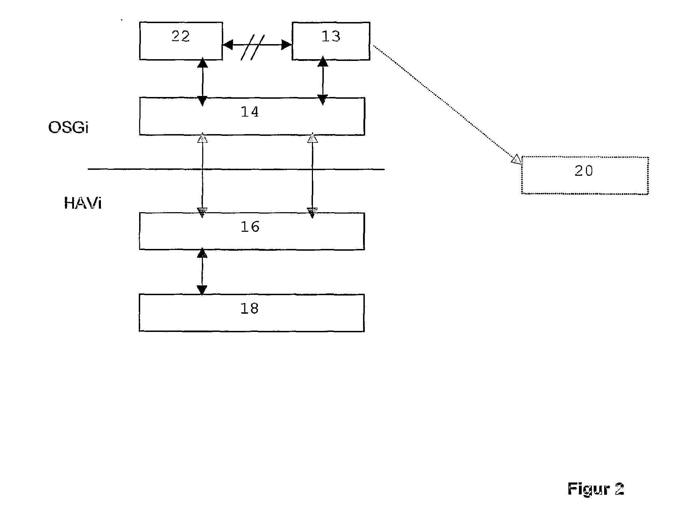

Figur 2 zeigt die schematische Darstellung einer Ansteuerung eines HAVi-Gerätes über ein DCM einer OSGi-Plattform.

Das OSGi DCM 13 kommuniziert ausschließlich mit dem Messaging System 16. Dadurch verläuft die Reservierung durch eine Applikation 22 völlig konform zum HAVi-Standard. Einer Applikation 22 ist insofern nicht bekannt, ob sie ein Gerät über ein HAVi DCM oder ein OSGi DCM steuert. Das OSGi DCM 13 nimmt Anforderungen vom Messaging System 16 entgegen und ist damit im gesamten HAVi-Netzwerk verfügbar. Die Kommunikation zwischen DCM 13 und zugehörigem Gerät 20 ist implementierungsabhängig und der Applikation 22 verborgen. Eine Java Applikation 22, die sich eines HAVi-Gerätes bedienen will, wendet sich daher ausschließlich an das HAVi Messaging System 16. Sie hat insbesondere keine direkte Verbindung zum DCM 13, nicht einmal dann, wenn das DCM 13 in derselben Java Umgebung installiert ist. Gegebenenfalls werden die Kommandos vom HAVi-Messaging System 16 wieder an das OSGi DCM 13 hinaufgereicht.

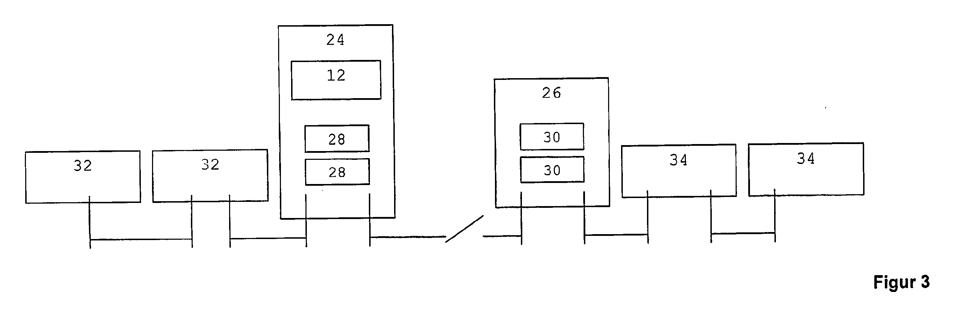

Figur 3 zeigt eine schematische Darstellung von zwei HAVi-Netzwerken. Ausgangspunkt sind zwei autonome HAVi-Netze mit Geräten (erstes Netz bestehend aus 12, 24, 28 und 32; zweites Netz bestehend aus 26, 30 und 34 und weiteren nicht dargestellten Komponenten wie DCM Manager, Stream Manager, Event Manager, Registry und Resource Manager), deren DCMs 28, 30 bereits aktiv sind. Werden beide Teilnetze zu einem Gesamtnetz verbunden, gibt es keinen Bedarf, nach neuen DCMs zu suchen. In OSGi würden die vom neuen Teilnetz hinzugekommenen Geräte daher unbekannt bleiben. Der OSGi DM Client 12 ist deshalb auch dafür zuständig, in diesem Fall das Hinzukommen neuer Geräte dem OSGi Device Access Service (nicht dargestellt) zu melden. Im Beispiel sind dies die Geräte 34. Damit wird gegebenenfalls die Installation eines OSGi Base Drivers ausgelöst.

## Patentansprüche

1. Verfahren zur Steuerung eines HAVi-Gerätes (20) eines HAVi-Netzwerks über ein Device Control Module (13) einer OSGi-Plattform, wobei das HAVi-Netzwerk ein Messaging System (16), eine Registry, einen Stream Manager, einen Event Manager, einen Resource Manager, ein HAVi-Gerät (20) und einen DM Leader (10) aufweist,
**dadurch gekennzeichnet, dass**
der DM Leader (10) des HAVi-Netzwerks mittels eines parallel und synchron laufenden DM Clients (12) der OSGi-Plattform nach verfügbaren Device Control Modulen (13) der OSGi-Plattform sucht und innerhalb der OSGi-Plattform verfügbare Device Control Module (13) als innerhalb des HAVi-Netzwerks verfügbare Device Control Module registriert, ein registriertes Device Control Module (13) vom DM Leader (10) ausgewählt wird, sich dieses ausgewählte Device Control Module (13) zur Steuerung des HAVi-Gerätes (20) beim HAVi Messaging System (16) und bei der Registry des HAVi-Netzwerkes anmeldet, eine Software Element Identification (SEID) zugewiesen bekommt und die Steuerung des HAVi-Gerätes (20) durch das im HAVi-Netzwerk angemeldete Device Control Modul (13) der OSGi-Plattform erfolgt.

2. Verfahren nach Anspruch 1,
**dadurch gekennzeichnet, dass**
beim Hinzutreten eines neuen HAVi-Gerätes (20, 32, 34) die Suche des HAVi DM (10) nach geeigneten DCMs (13,28,30) auf den OSGi DM Client (12) erweitert wird.

3. Verfahren nach Anspruch 1 bis 2,
**dadurch gekennzeichnet, dass**
bei Auswahl eines OSGi DCMs (13) durch den HAVi DM (10) die Bekanntmachung des OSGi DCMs (13) im HAVi-Netzwerk durch selbsttätiges Anmelden des OSGi DCMs (13) an der HAVi Registry erfolgt.

4. Verfahren nach Anspruch 1 bis 3,
**dadurch gekennzeichnet, dass**
der OSGi DM Client (12) der OSGi-Plattform über den lokalen HAVi DM (10) mit dem DM Leader des HAVi-Netzwerkes verbunden wird, sofern das HAVi-Netzwerk mehrere DMs (10) aufweist.

5. Verfahren nach Anspruch 1 bis 4,
**dadurch gekennzeichnet, dass**
Änderungen über verfügbare Device Control Module (13) des OSGi-DM-Clients (12) dem HAVi DM (10) mitgeteilt werden.

6. Verfahren nach Anspruch 1 bis 5,
**dadurch gekennzeichnet, dass**
ein Device Control Modul (13) der OSGi-Plattform als Bundle innerhalb der OSGi-Plattform verarbeitet wird.

7. Verfahren nach Anspruch 1 bis 6,
**dadurch gekennzeichnet, dass**
ein Device Control Modul (13) der OSGi-Plattform zur Steuerung eines HAVi-Gerätes (20, 32, 34) über ein MS Adaption Layer (14) mit dem HAVi-Netzwerk kommuniziert.

8. Verfahren nach Anspruch 1 bis 7,
**dadurch gekennzeichnet, dass**
ein Hinzukommen neuer Geräte (34), für die bereits DCMs (30) im HAVi Netzwerk registriert sind, dem OSGi DM Client (12) mitgeteilt wird.

9. Verfahren nach Anspruch 1 bis 8,
**dadurch gekennzeichnet, dass**
der OSGi DM Client (12) das Hinzukommen neuer Geräte (34) dem OSGi Device Access Service mitteilt.

## Claims

1. Method for controlling an HAVi device (20) in an HAVi network using a device control module (13) on an OSGi platform, where the HAVi network has a messaging system (16), a registry, a stream manager, an event manager, a resource manager, an HAVi device (20) and a DM leader (10),
**characterized in that**
the DM leader (10) in the HAVi network uses a DM client (12) with parallel and synchronous operation on the OSGi platform to search for available device control modules (13) on the OSGi platform and records device control modules (13) which are available within the OSGi platform as device control modules which are available within the HAVi network, a recorded device control module (13) is selected by the DM leader (10), this selected device control module (13) registers with the HAVi messaging system (16) and with the registry of the HAVi network for the purpose of controlling the HAVi device (20), and is allocated a software element identification (SEID), and the HAVi device (20) is controlled by the OSGi platform's device control module (13) registered in the HAVi network.

2. Method according to Claim 1,
**characterized in that**
when a new HAVi device (20, 32, 34) arrives the search by the HAVi DM (10) for suitable DCMs (13, 28, 30) is extended to the OSGi DM client (12).

3. Method according to Claims 1 and 2,
**characterized in that**
when an OSGi DCM (13) is selected by the HAVi DM (10) the OSGi DCM (13) is announced in the HAVi network through automatic registration of the OSGi DCM (13) with the HAVi registry.

4. Method according to Claims 1 to 3,
**characterized in that**
the OSGi DM client (12) on the OSGi platform is connected to the DM leader in the HAVi network via the local HAVi DM (10) if the HAVi network has a plurality of DMs (10).

5. Method according to Claims 1 to 4,
**characterized in that**
changes relating to available device control modules (13) from the OSGi DM client (12) are communicated to the HAVi DM (10).

6. Method according to Claims 1 to 5,
**characterized in that**
a device control module (13) on the OSGi platform is processed as a bundle within the OSGi platform.

7. Method according to Claims 1 to 6,
**characterized in that**
a device control module (13) on the OSGi platform controls an HAVi device (20, 32, 34) by communicating with the HAVi network via an MS adaptation layer (14).

8. The method as claimed in Claims 1 to 7,
**characterized in that**
addition of new devices (34) for which DCMs (30) have already been recorded in the HAVi network is communicated to the OSGi DM client (12).

9. Method according to Claims 1 to 8,
**characterized in that**
the OSGi DM client (12) communicates the addition of new devices (34) to the OSGi device access service.

## Revendications

1. Procédé de commande d'un appareil HAVi (20) dans un réseau HAVi par un module de commande de dispositif (13) d'une plate-forme OSGI selon lequel :
le réseau HAVi comporte un système de message (16), un registre, un gestionnaire de flux, un gestionnaire d'évènements, un gestionnaire de ressources, un appareil HAVi (20) et un pilote DM 10,
**caractérisé en ce que**
le pilote DM (10) du réseau HAVi cherche à l'aide d'un client DM (12) fonctionnant en parallèle et en synchronisme de la plate-forme OSGi, des modules de commande de dispositif (13), disponibles dans la plate-forme OSGi et les enregistre dans le réseau HAVi comme modules de commande de dispositif, disponibles, le pilote DM (10) sélectionne un module de commande de dispositif (13), enregistré, il annonce ce module de commande de dispositif (13) sélectionné pour la commande de l'appareil HAVi (20) auprès du système de message HAVi (16) et dans le registre du réseau HAVi, il reçoit une identification d'élément de programme (SEID) et la commande de l'appareil HAVi (20) se fait par le module de commande de dispositif (13) signalé dans le réseau HAVi de la plate-forme OSGi.

2. Procédé selon la revendication 1,
**caractérisé en ce qu'**
à l'introduction d'un nouvel appareil HAVi (20, 32, 34), on étend la recherche des dispositifs HAVi DM (10) par des modules de commande de dispositif DCM (13, 28, 30) appropriés pour l'étendre au client OSGi DM (12).

3. Procédé selon l'une quelconque des revendications 1 et 2,
**caractérisé en ce qu'**
à la sélection d'un module OSGi DCM (13) par le pilote HAVi DM (10), la publication du module OSGi DCM (13) dans le réseau HAVi se fait par une annonce automatique du module OSGi DCM (13) dans le registre HAVi.

4. Procédé selon l'une quelconque des revendications 1 à 3,
**caractérisé en ce qu'**
on relie le client OSGi DM (12) de la plate-forme OSGi par le pilote HAVi DM (10), local au pilote DM du réseau HAVi dans la mesure où ce réseau HAVi comporte plusieurs pilotes DM (10).

5. Procédé selon l'une quelconque des revendications 1 à 4,
**caractérisé en ce que**
les modifications concernant le module de commande de dispositif (13) disponible du client OSGi DM (12) sont communiquées au pilote HAVi DM (10).

6. Procédé selon l'une quelconque des revendications 1 à 5,
**caractérisé en ce qu'**
un module de commande de dispositif (13) de la plate-forme OSGi est traité comme faisceau dans la plate-forme OSGi.

7. Procédé selon l'une quelconque des revendications 1 à 6,
**caractérisé en ce qu'**
un module de commande de dispositif (13) de la plate-forme OSGi communique par une couche d'adaptation MS (14) avec le réseau HAVi pour commander un appareil HAVi (20, 32, 34).

8. Procédé selon l'une quelconque des revendications 1 à 7,
**caractérisé en ce que**
l'introduction de nouveaux appareils (34) pour les modules de commande de dispositif DCM (30) est enregistrée dans le réseau HAVi et cette introduction est communiquée au client OSGi DM (12).

9. Procédé selon l'une quelconque des revendications 1 à 8,
**caractérisé en ce que**
le client OSGi DM (12) communique l'adjonction de nouveaux appareils (34) au service d'accès au dispositif OSGi.
